# EUROPEAN PATENT SPECIFICATION

(11) **EP 2 562 150 B1**
(45) Date of publication and mention of the grant of the patent: **15.10.2014**
(21) Application number: 11179069.7
(22) Date of filing: 26.08.2011
(51) Int. Cl.: C07B 59/00

(54) **A process and device for producing pet radiotracers**
Verfahren und Vorrichtung zur Herstellung von Haustierfunkverfolgern
Procédé et dispositif pour la production de radiomarqueurs pour animaux domestiques

(43) Date of publication of application: 27.02.2013
(73) Proprietor: FutureChemistry Holding B.V., 6525EC Nijmegen (NL); Stichting Katholieke Universiteit, 6525 HP Nijmegen (NL)
(72) Inventor: van den Broek, Sebastiaan Antonius Martinus Waltherus, 5421 DR Gemert (NL); Nieuwland, Pieter Jos, 6512 AG Nijmegen (NL); Koch, Kaspar, 6524 PK Nijmegen (NL); Rutjes, Floris Petrus Johannes Theodorus, 6605 DD Wijchen (NL)
(74) Representative: Nederlandsch Octrooibureau

(56) References cited:
- WO-A1-2008/128201
- GROOT T J DE ET AL: "SYNTHESIS OF (18F)FLUORO-LABELED PROGESTINS FOR PET", INTERNATIONAL JOURNAL OF RADIATION APPLICATIONS ANDINSTRUMENTATION PART A: APPLIED RADIATION AND ISOTOPES, PERGAMON PRESS LTD., EXETER, GB, vol. 42, no. 5, 1 January 1991 (1991-01-01), pages 471-474, XP000227177, DOI: 10.1016/0883-2889(91)90108-D

## Description

### Field of the invention

The invention relates to the field of synthesis of radiotracers, e.g. positron emitter labelled PET or SPECT tracers. More in particular, this invention provides processes and devices for producing radiotracers.

### Background of the invention

Positron emission tomography (PET) is an imaging technique to obtain qualitative and quantitative molecular and biochemical information about in vivo human physiological processes. The technique is based on distribution of positron emitting isotopes in the tissue of a patient. Administration of these isotopes, e.g. F-18, C-11, N-13 or O-15, is generally accomplished by a covalent linkage to a molecule that is readily metabolized and/or excreted from the body. The most common PET radiotracer in use today is 18F-2-deoxyfluoroglucose (18F-FDG), a radiolabeled glucose molecule.

The most common radioisotope for PET, 18F-fluoride, has a relatively short half-life of 110 minutes. 18F-fluroide labeled tracers for PET therefore have to be synthesized and purified as rapidly as possible, and ideally within one hour of clinical use. 18F-fluoride is produced in a cyclotron by a bombardment of O-18 enriched water (H₂¹⁸O) with protons whereby only a small fraction of the water is converted into the 18F-fluoride.

The [18F] isotope is then separated from water and processed for production of a radiopharmaceutical agent. Conventional recovery of 18F-fluoride from the aqueous solution is already described in literature by Hamacher in 1986. This method is based on separation of 18F-fluoride from H₂¹⁸O by trapping of all anions (including fluoride) onto an ion exchange resin. In the next step the 18F-fluoride is released using a mixture of solvents (acetonitrile and water) containing potassium carbonate and a phase transfer catalyst such as Kryptofix 222 (K222).

The most usual labelling method, known as nucleophilic substitution, requires anhydrous or very low water content solutions and whatever the method used, an evaporation step always follows the recovery of the [18F]fluoride. It usually consists in multiple azeotropic evaporations of acetonitrile or low boiling temperature organic solvent, that require several minutes.

18F-FDG is the most widely used 18F-fluoride based PET radiotracer used in PET scan to measure the glucose metabolic rate. Other clinically important tracers used nowadays are 18F-FLT and 18F-FMISO. Presently, [F-18]FDG is produced on a routine basis in a processing time (or cycle time) of about 50 minutes using macroscopic commercial synthesizers. These synthesizers consist, in part, mechanical valves, glass-based reaction chambers and ionexchange columns. The physical size of these units is typically in the order of 80 cm x 40 cm x 60 cm. Descriptions of macroscopic synthesizers can be found, for example, in WO 2007/066089, WO 2005/057589, US 2007/0031492, and US 2004/022696. Because of the long processing times, low reagent concentrations of macroscopic synthesizers, and the short half-life of fluorine-18 (t1/2=109.7 min), a considerable decrease in the radiochemical yields of the resulting probe are inevitably obtained. Moreover, because a number of commercialized automation system are constructed for macroscopic synthesis, the process requires the consumption of large amounts of valuable reagents (e.g., precursors or Kryptofix2.2.2), which is inefficient and wasteful for both clinical and research purposes.

The numbers of biological processes that can be monitored by PET are so large and only a few of them are used in clinical applications. The ability to design a molecule (e.g. peptide or protein based) to assess a particular interaction will be of growing interest for the next years. Existing modules are difficult to modify for the research and development of new compounds and probes
because these still depend on batch-wise recovery, drying, redissolving and addition of precursor, wherein all radionuclide is consumed in a single reaction. Furthermore, the reactions in such modules take place with reduced efficiency due to the tremendous dilution of reagents necessary for macroscopic liquid handling.

Microfluidic reactor technology and flow chemistry open the possibilities for a fast optimisation of radiochemical synthesis, but these techniques require a continuous dispense of the radioactive material. The need for automation of radiochemistry is also prompted by the need to protect the operator from radiation exposure.

WO 2008/128201 discloses a process for producing PET radiotracers in a microfluidic device. Although the device allows for highly automated operation, it is still configured to consume an entire batch of radioisotope in one single reaction.

Accordingly, there is a need to develop systems and devices capable of processing small quantities of radioisotope, providing the flexibility to produce a wide range of probes, biomarkers and labeled drugs or drug analogues, inexpensively.

It is an object of the present invention to provide processes and devices able to continuously deliver radionuclide in a manner facilitating high throughput microfluidic reactor radiochemical synthesis.

### Summary of the invention

A substantial improvement of the existing technology was found in redissolving dried radioisotope or radioisotope complex in an organic solvent followed by recollection of the solution into a syringe and continuously dispensing into the microfluidic system, actuated by that same syringe for continuous or batch-wise synthesis of PET radiotracers.

One aspect of the present invention concerns a process for the production of a PET or SPECT radiotracer, the method comprising:
a) providing a first liquid containing a radioisotope containing starting material; l;
b) at least partially drying the radioisotope containing starting material;
c) combining the at least partially dried radioisotope containing starting material with a solvent to produce a second liquid containing the radioisotope containing starting material;
d) introducing at least part of the second liquid containing the radioisotope containing starting material and substrate material in a reactor; and
e) reacting the radioisotope containing starting material with substrate material to produce the PET or SPECT radiotracer, wherein a syringe pump is used for adding the solvent to the at least partially dried radioisotope containing material, and wherein the same syringe pump is used for collecting the second liquid and transferring said second liquid to the reactor, and wherein the radioisotope is fluorine-18.

A further aspect of the invention concerns a so-called continuous dispensing unit (CDU) for continuously dispensing a radioisotope containing starting material, said continuous dispensing unit comprising:
i) an ion exchange column (3);
ii) an inlet (1) for introducing a liquid that has been treated in a particle accelerator;
iii) a liquid reservoir (2) and/or means for operably connecting a liquid reservoir to the CDU
iv) a conduit system (5, 6) for directing liquid flows from the inlet to the ion exchange column and from the liquid reservoir to the ion exchange column;
v) a drying unit (9) comprising a heater;
vi) a conduit system (10) for directing a liquid flow from the ion exchange column to the drying unit
vii) a solvent reservoir (13);
viii) a syringe pump (15);
ix) an outlet (16); and
x) a conduit system (11, 12, 14) for directing liquid flows between the solvent reservoir and the syringe pump, between the drying unit and the syringe pump and between the syringe pump and an outlet of the dispensing unit.

A further aspect of the invention concerns an instrument suitable for continuous production of a PET radiotracer comprising:
i) the continuous dispensing unit described above
ii) a second liquid dispensing unit;
ii) a microfluidic device comprising a first inlet connected to the CDU, a second inlet connected to a second dispensing unit, which continuously dispenses a liquid containing the substrate, and a reactor area (18), and a conduit system directing a first flow of liquid from the CDU together with a second flow of liquid from the second dispensing unit into the reactor area (17).

The above described CDU and instrument for radiotracer production, as will be understood by those skilled in the art, are designed for implementing the process of the present invention. The terms "device," "apparatus" and "instrument" are used interchangeably herein and are not intended to limit the scope of the claimed invention

Some of the advantages associated with the various aspects and embodiments of the present invention include, for example, reduced reagent use (thus reduced cost of chemical product), increased concentration of the radiolabel, such as F-18, which increases reaction efficiencies and yields; and the ability to synthesize compounds on demand and in a flexible manner. Other advantages include the ability to synthesize multiple products sequentially without user exposure to radiation between the runs (which is inevitable in conventional systems). This in contrast to known systems that have to be cleaned and set after a single run which makes optimisation a time consuming process.

Because the amount of radioisotope dried prior to the reaction can be continuously dispensed into the reactor, the present technology shows a potential as application for the synthesis of PET radiotracers at high concentration and with high specific activity for high yielding processes with high throughput.

Another advantage associated with the above described CDU containing a syringe pump for dispensing the radioisotope solution includes the ability for precise control of the rate of dispense from the CDU, so that the CDU is highly suited for microfluidics applications, as opposed to prior art systems depending on the use of gas driven liquid handling.

Other advantages of the various embodiments of the present invention will become apparent from the detailed description below and the appending examples.

### Detailed description of the Invention and preferred embodiments

As will be evident from the foregoing, the present invention, in part, is based on the dispensing and aspiration method of an actuator and the efficient complexation of the 18F-fluoride, described by Hamacher et. al (Hamacher, K., Coenen, H.H., Stocklin, G., J. Nucl. Med. 1986, 27, 235-238), the entire disclosure of which is to be considered incorporated herein by reference.

In a preferred embodiment of the invention, a process for the production of a PET or SPECT radiotracer is provided, characterized in that radioisotope containing liquid is continuously dispensed into a microfluidic reactor. In accordance with this invention the radioisotope containing liquid, referred to herein as 'the second liquid', typically is not consumed all at once for a single (batch-)reaction of producing radiotracer. Instead, in one embodiment, the second liquid is dispensed in a flowchemistry device. In another embodiment of this invention, the second liquid is dispensed for multiple batch-reactions with substrate. In such an embodiment one or more cycles of steps a-c are performed independently of one or more cycles of steps d-e.

In particular, the present process can be designed so that a single cycle of steps a-c produces an aliquot of said second liquid that is used to perform steps d-e in a continuous manner, e.g. in a flowchemistry device, for a certain amount of time or to perform batch-wise several cycles of steps d-e, typically at least >2, >3, >4, >5, >7, >10 or >15 cycles of steps d-e. The latter embodiment is particularly suited for high throughput purposes, e.g. to optimize radiotracer production by varying conditions, substrates, reagents, etc. Hence in a preferred embodiment, a cycle of steps a-c is followed batch-wise by several cycles of steps d-e as described above, wherein at least one cycle of steps d-e differs from a cycle preceding it in at least one of the reaction conditions, the reagents and/or the substrate.

As used herein, the term "radiotracer" refers to a compound into which a radionuclide suitable for PET or SPECT scanning is incorporated. Radionuclide suitable for PET or SPECT scanning are isotopes exhibiting radioactive decay (e.g., emitting positrons), typically with short half-lives. Such isotopes are also referred to herein as radioisotopes or radionuclides. Radioisotopes are denoted herein using various commonly used combinations of the name or symbol of the element and its mass number (e.g., ¹⁸F, [F-18], fluorine-18). Exemplary radioactive isotopes include iodine-124, fluorine-18, carbon-11, nitrogen-13, and oxygen-15, which have half-lives of 4.2 days, 110 minutes, 20 minutes, 10 minutes, and 2 minutes, respectively. The radioisotope according to the present invention is fluorine-18.

The first liquid containing a radioisotope containing starting material is typically produced in a manner *per se* known by those skilled in the art, e.g. by separation of 18F-fluoride from H₂¹⁸O ("target water"). Radioisotope containing liquids, such as target water are typically produced in a particle accelerator such a cyclotron, where charged particles bombard other atoms to produce the short-lived positron-emitting isotopes.

Production of the radioisotope, in one embodiment, is contemplated separately from the system disclosed herein, as it is not anticipated that operators will usually have their own particle accelerator and delivery from an external source is necessary. The treated liquid containing the radioisotope is typically supplied to the CDU from a cartridge or a prefilled individual vial. In an exemplary system, the radioisotope is delivered, e.g. each day in an easy-to-connect leaded-vial.

However, embodiments are also envisaged wherein the radioisotope if produced using a low power particle accelerator. An example of a small low-power particle accelerator that could suitably be used in accordance with this invention is described in US 2008/0067413. As will be understood by those skilled in the art, such small low-power particle accelerator equipment may be operably connected with the CDU inlet to transfer the target water to the ion exchange column directly.

Hence, the CDU that may be used to implement the present invention comprises an inlet that can be operably connected to a vial or cartridge holding a solution treated in a cyclotron or other type of particle accelerator. In one embodiment the inlet can be operably connected directly to a particle accelerator.

In accordance with the invention, production of the radioisotope containing starting material comprises treatment of the target water on an ion exchange resin, preferably an anion exchange resin. The ions are then eluted into a mixture containing water, organic solvents, a phase transfer agent or activating agent or phase transfer catalyst to produce the first liquid containing radioisotope containing starting material.

Any resin or chromatography phase may be used on which sufficiently strong interactions between the exchange phase and the charged species such as covalent bonding, physisorption, chemisorption and/or electrostatic interactions allow the positively charged species on which the anion exchange occurs, such as ammonium, phosphonium or sulfonium species, to remain attracted during the whole extraction process. The term anion-exchange phase includes both strong anion-exchanger and reversed or normal phase behaving as a weak anion exchanger (for example NH2-silica, DEAE-cellulose, etc.). In one embodiment of the invention the anion exchange resin is quaternary methylammonium anion-exchange resin (QMA).

The radioisotope containing starting material, preferably 18F fluoride is then typically eluted from the anion exchange resin using a small volume of base solution. The base is suitably selected from a potassium salt (such as potassium carbonate, potassium bicarbonate, or potassium sulphate) and is provided in a solution comprising organic solvent (suitably selected from acetonitrile, dimethylformamide, dimethylsulfoxide, tetrahydrofuran, dioxan, 1,2-dimethoxyethane, sulfolane or N-methylpyrrolidinone or a mixture of any thereof), water, or an organic solvent containing water. In one embodiment the base is a K₂CO₃ solution.

Typically, a phase transfer catalyst is added to the base solution, e.g. Kryptofix 222 (4,7,13,16, 21,24-hexaoxa-1,10-diazabicyclo [8,8,8] hexacosan); a tetraalkylammonium salt (such as tetraalkylammonium carbonate, tetralkylammonium bicarbonate, or tetraalkylammonium sulphate); a phosphonium salt (such as phosphonium carbonate, phosphonium bicarbonate, or phosphonium sulphate); a cesium salt (such as cesium carbonate, cesium bicarbonate, or cesium sulphate); and an imidazolium salt (such as imidazolium carbonate, imidazolium bicarbonate, or imidazolium sulphate) an aminopolyether or crown ether may be added. In one embodiment of the invention the phase transfer catalyst is 4,7,13,16,21,24 hexaoxa-1,10-diazabicyclo[8,8,8] hexacosane (Kryptofix 2.2.2).

In one embodiment of the invention, a reservoir for the base solution (7) is part of the CDU that may be used to implement the present process. In another embodiment of the invention, the CDU comprises a means for operably connecting an external reservoir containing said base solution.

In one embodiment of the invention, the CDU comprises a conduit system for directing liquid flows from the inlet to the ion exchange column and from the liquid reservoir to the ion exchange column. Such a conduit system comprises one or more valves (6) and fluidic conduits (5). Typically it comprises one or more valves and tubing or flow-channels connecting each of the inlet, the ion exchange column and the liquid reservoir, in such a manner that the one or more valves can be set to place into fluidic communication the inlet and ion exchange column and the liquid reservoir and ion exchange column.

The valve can be any device that can be controlled to regulate and direct fluid flow among various components of the device. Conventional types of valves included for example mechanical or micromechanical valves, pressure activated elastomeric valves, pneumatic valves, solid-state valves, etc. Such valves are known in the art and it is apparent to those skilled in the art how to select an appropriate type and implement it in a CDU design.

As used herein, the term 'fluidic conduit' refers to any type of three-dimensional spacing through which a fluid can be made to flow from one point to another. Typically, in the present CDU the conduits comprise tubing or flow-channels. By way of example, such tubing or flow-channels may have an inner cross-section dimension in the range of 0.05 mm to 2.5 cm. The particular shape and size of the conduits may depend on the exact design of the CDU and the invention is not particularly limited in this respect. Suitable embodiments will be apparent to those skilled in the art, on the basis of this description and the appending examples.

As will be understood by those skilled in the art, the CDU will typically also comprise a fluidic actuator (4) for driving the flows of liquids between the inlet and the liquid reservoir to the ion exchange column. Any type of fluidic actuator can be used in accordance with the present invention. In a particularly preferred embodiment of the invention, the fluidic actuator is a syringe pump. In the present context, the term "syringe pump" shall mean a pumping device that includes syringe, i.e. a barrel, housing or similar structure that defines a cavity, chamber, or similar structure in which a piston, plunger or similar structure is slidable so as to eject a fluid there. A syringe pump allows for precise actuation of the fluids in the CDU. The syringe can be connected to the above described CDU unit by connecting it to one of the valves in such a manner that the valve can be set to place into fluidic communication the syringe and liquid reservoir; and the syringe an ion exchange column.

In the process of the invention, the ion exchange resin may be regenerated after use by flushing it with a regeneration liquid. In a similar fashion, wash solvents may be flowed through the entire CDU to drain and clean it. In one embodiment, the entire system can be washed and/or regenerated without disassembling the system and without removing the shielding. As will be understood by those skilled in the art, the CDU used for implementing the process may thus comprise one or more additional reservoirs (7) or means for connecting additional reservoirs containing regeneration and/or wash liquid as well as one or more conduits (8) for directing flows of the regeneration and/or wash liquid from the one or more additional reservoirs to the ion exchange column. Typically conduits are provided connecting the regeneration and/or wash liquid reservoir(s) to one of the valves of the above described conduit system.

In the present process, the radioisotope containing starting material, e.g. the liquid containing the ¹⁸F-fluoride-cryptate complex, eluting from the ion exchange column as described above, is subsequently subjected to a step b) comprising at least partially drying the radioisotope containing starting material. Drying may be accomplished using heating means, gas stream and/or vacuum, etc. Step b) may optionally comprise addition of acetonitrile and repeated drying. In a particularly preferred embodiment of the invention, step b) comprises azeotropic distillation or drying, preferably azeotropic distillation or drying using acetonitrile. Azeotropic distillation usually refers to the specific technique of adding another component to generate a new, lower-boiling azeotrope that is heterogeneous, e.g. producing two, immiscible liquid phases.

Typically step b) is performed in a drying unit comprising a vial or reservoir equipped with a heating means. As will be understood, the CDU of the invention therefore preferably comprises a drying unit, preferably a vial comprising a heating means, more preferably a miniaturized vial comprising a heat source. Suitable heating means include but are not limited to resistive heating devices, localized and non-localized microwave heating devices and Peltier devices.

In accordance with the invention, in step c), the residue remaining in the drying unit following step b) is typically combined with a solvent, such as acetonitrile, DMSO, DMF, THF, alcohols, etc., to produce a second liquid containing the radioisotope containing starting material. In a particularly preferred embodiment of the invention the radiotracer is 18-fluroine and the solvent is acetonitril. As will be understood by those skilled in the art, the solvent used for redissolving the radioisotope in step c), may be the same solvent used for an azeotropic drying operation in step b), which simplifies the design of the CDU. The amount of solvent is typically very small, e.g. in the order of 25 - 2500 µL, so that a highly concentrated second liquid is obtained. In a particularly preferred embodiment step c) comprises introducing the solvent into the drying unit containing the at least partially dried radioisotope containing starting material.

As will be understood by those skilled in the art, the CDU used for implementing the process may comprise a solvent reservoir (13) or a means for connecting an additional reservoir containing solvent and a conduit (12) for directing a flow of the liquid from the additional reservoir to the drying unit.

In accordance with the invention, the solvent is transferred from the reservoir to the drying unit using a syringe pump.

In accordance with the invention, said same syringe pump (15) is used for collecting at least part of the second liquid produced in step c) from the drying unit as well as for the subsequent continuous dispense of said second liquid into the microfluidic reactor.

Hence, accordance with the invention, the CDU that may be used to implement the present process, comprises a conduit system (11, 12, 14) for directing liquid flows between the solvent reservoir and the syringe pump, between the drying unit and the syringe pump and between the syringe pump and an outlet of the dispensing unit. Such a conduit system typically comprises one or more valves (11, 14) and one or more fluidic conduits (12), typically as a piece of tubing or microfluidic channel. For example, a 4-way valve and tubing or microfluidic channels connecting each of the drying unit, the syringe, the solvent reservoir or means for connecting a solvent reservoir, and the outlet to the valve, in such a manner that the valve can be set to place into fluidic communication the syringe and the solvent reservoir or means for connecting a solvent reservoir; the syringe and the drying unit; and the syringe and the outlet.

In the process defined above, a syringe pump (15) is used for transferring solvent from the solvent reservoir to the at least partially dried radioisotope containing material in the drying unit and that the same syringe pump is used to aspirate at least part of the second liquid containing the radioisotope containing starting material from the drying unit. Second liquid contained in the syringe can subsequently be dispensed into the reactor in a continuous manner. In one embodiment the invention entails dispensing said second liquid in a microfluidic reactor, e.g. a flow-chemistry device. In another embodiment the invention entails the dispense of said second liquid in a multiple vial system.

A "microfluidic reactor" is a unit or device that permits the manipulation and transfer of small amounts of liquid (e.g., microliters or nanoliters), typically in micro-channels. The micro-channels make it possible to manipulate extremely small volumes of liquid, for example on the order of nL to µL. Generally, the microfluidic channels or tubes (sometimes referred to as micro-channels or capillaries) have at least one cross-sectional dimension (e.g., height, width, depth, diameter), which by the way of example, and not by limitation may range from 2,500 µm to 50 µm. The device may be configured to allow the manipulation of liquids, including reagents and solvents, to be transferred or conveyed within the microfluidic channels and reaction chamber using mechanical or non-mechanical pumps. The device may be constructed using micro-electromechanical fabrication methods as known in the art. Examples of materials for forming the device include stainless steel, glass, quartz or polymer. Such polymers may include PMMA (polymethylmethacrylate), PC (polycarbonate), PDMS (polydimethylsiloxane), DCPD (polydicyclopentadiene), PEEK and the like. Such device may comprise columns, pumps, mixers, valves and the like.

The second liquid containing radioisotope, is typically dispensed continuously in the microfluidic reactor and combined with a substrate material to produce the PET or SPECT radiotracer.

The term "substrate material" refers to an organic or inorganic non-radioactive molecule that is reacted with the radioactive isotope, typically by nucleophilic substitution, electrophilic substitution, or ionic exchange, to form the PET or SPECT radiotracer. The chemical nature of the reactive precursor depends upon the physiological process to be studied. Typically, the reactive precursor is used to produce a radiolabeled compound that selectively labels target sites in the body, including the brain, meaning the compound can be reactive with target sites in the subject and, where necessary, capable of transport across the blood-brain barrier. Exemplary organic reactive precursors include sugars, amino acids, proteins, nucleosides, nucleotides, small molecule pharmaceuticals, and derivatives thereof. Common PET or SPECT radiotracers include 2-deoxy-2-[F-18]-fluoro-D-glucose (¹⁸F-FDG), 3'-deoxy-3'-[F-18]-fiuorothymidine (¹⁸F-FLT), 9-[4-[F-18] fluoro-3-(hydroxymethyl)butyl]guanine (¹⁸F-FHBG), 9-[(3-[F- 18] fluoro-l-hydroxy-2-propoxy)methyl] guanine (¹⁸F-FHPG), 3-(2'-[F- 18] fluoroethyl)spiperone (¹⁸F-FESP), 4-[F-18] fluoro-N-[2-[I-(2-methoxyphenyl)-1- piperazinyl] ethyl] -N-2-pyridinyl-benzamide (¹⁸F-p-MPPF), 2-(I-{6-[(2-[F-18]fiuoroethyl)- (methyl)amino]-2-naphthyl} ethylidine)malononitrile (¹⁸F-FDDNP), 2-[F-18] fluoro-[alpha]- methyltyrosine, [F-18] fluoromisonidazole (¹⁸F-FMISO), 5-[F-18] fluoro-2'-deoxyuridine (¹⁸F-F dUrd). Other common radiolabeled compounds include ¹²³I-methionine and ¹¹C-acetic acid. Hence preferably the substrate material is a precursor for one of the above radiotracers.

The simplest pathway proposed for the labelling with fluorine-18 is a one-step radiochemical process, involving a direct substitution of an appropriate atom or group (a leaving part) by fluorine-18. The best leaving-groups are the weakest bases, which is consistent with the principle that stable species make better leaving-groups. lodide is usually the best leaving-group of the halides and fluoride the poorest. The sulphonic ester groups, such as the triflate (CF₃SO₃-), tosylate (p-MeC₆H₄SO₃-), mesylate (CH₃SO₃-), brosylate (p-BrC₆H₄SO₃-) and nosylate (m-NO₂C₆H₄SO₃-), are better leaving-groups than halides, leading to the following ranking order: RSO₃>I>Br>Cl>F. Of course, fluorine, in spite of its excellent leaving-group ability, is seldom used in fluorine-18 chemistry because of obvious isotopic dilution, leading to low specific radioactivity. Aliphatic nucleophilic substitutions are usually performed under basic or neutral conditions, with a large assortment of solvents possible. Indeed, the effects of the solvent on SN₂-type reactions depend on the charge dispersal in the transition state compared to the one in the reactants. However, in radiofluorinations with ¹⁸F-fluoride the solubility of the reactants appears to play a larger role in solvent choice than the solvent effects on reaction rates. The most common solvents are the polar aprotic ones, such as acetonitrile, in which the radioisotope or radioisotope complex, such as ¹⁸F-KF/K222 complex and the organic precursors for labelling show good solubility. The reaction is often performed at reflux temperature of the solvent for a few minutes.

The step of reacting the radioisotope containing starting material and the substrate may comprise heating of the reaction mixture.

In a particularly preferred embodiment of the invention, a microfluidic reactor is provided that may be used to implement the above process, said microfluidic reactor comprising a first inlet connected to the CDU, a second inlet connected to a second dispensing unit, which continuously dispenses a liquid containing the substrate, and a reactor area (18), and a conduit system directing a first flow of liquid from the CDU together with a second flow of liquid from the second dispensing unit into the reactor area (17). Additionally, the microfluidic reactor may comprise means for heating the reactor area (19), e.g. means for resistive heating, means for localized and non-localized microwave heating and Peltier devices.

A further aspect of the invention concerns an instrument that may be used to implement the present process of producing a PET radiotracer comprising the continuous dispensing unit described above, a second liquid dispensing unit and a microfluidic reactor as described above. Various sensors (e.g., flow sensors, radioactivity sensors, pressure sensors, temperature sensors, and the like) and other apparatus components (e.g., valves, switches, etc.) can be integrated into the instrument.

In accordance with a preferred embodiment of the invention one or more parts of the CDU and/or the microfluidic reactor are contained in a radioactivity shield. Preferably, the CDU and microfluidic reactor are contained in a radioactivity shield. In one embodiment, shielding consists of a box built from lead panels. As opposed to encapsulating the entire device, which increases the device weight and exposes the electronics to radiation, localized shielding may be implemented to cover only the radiation- handling components, such as the ion exchange column, the microfluidic reactor, and the F- 18 source vial. This arrangement uses significantly less shielding material while maintaining protection for the electronic components. An embodiment is also envisaged wherein certain parts of the CDU and/or microfluidic device, typically the parts emitting most of the radiation, such as the drying unit, the syringe pump and a collection vial for the radiotracer, are contained in individual radioactivity shields and the entire device is contained in a further radioactivity shield. In such an embodiment the latter radioactivity shield can be substantially thinner. Alternatively, the instrument may be designed of such a size that it can fit inside an appropriately shielded mini-cell, if desired.

As will be understood by those skilled in the art, the CDU and/or microfluidic reactor may be equipped with means for partial or complete automation of operation. The hardware described herein can be controlled using various electronic hardware instrumentations and devices. For example, a PC- 104 based system may be used with 16 analog inputs, 10 analog outputs, 8 digital inputs, and 48 digital outputs. The controller can run, for example, embedded Windows-NT software that communicates via an Ethernet connection to a standard PC running the automation software, to control the various valves, syringes, and other components. The interface may allow various modes of operation such as fully-automated, manual, or step-wise operations.

It is contemplated that any embodiment discussed in this specification can be implemented with respect to any of the methods, objects, compositions and uses of the invention, and vice versa. It will be understood that particular embodiments described herein are shown by way of illustration and not as limitations of the invention. The principal features of this invention can be employed in various embodiments without departing from the scope of the invention. Those skilled in the art will recognize, or be able to ascertain using no more than routine experimentation, numerous equivalents to the specific procedures described herein. Such equivalents are considered to be within the scope of this invention and are covered by the claims.

Furthermore, for a proper understanding of this invention and its various embodiments it should be understood in this document and the appending claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

The following examples describe various new and useful embodiments of the present invention. These examples are for illustrative purposes and do not limit the scope of the invention.

### Examples

### Example 1: production of cryptate fluoride solution

0.5 GBq 18F-fluoride is released from a QMA-cartridge with a solution of K222/K₂CO₃(aq)/MeCN into the dry unit. The fluoride is azeotropically dried with MeCN, redissolved in 1 mL MeCN and collected into the syringe. The fluoride solution is continuously dispensed into a microfluidic reactor with an internal volume of 100 µL at different temperatures (60-140°C). The flowrate of dispensing is 5 µL/min. The fluoride solution is collected over a period of 1 hour in fractions of 25 µL.

### Example 2: Synthesis and reaction optimisation of 18F-FDG

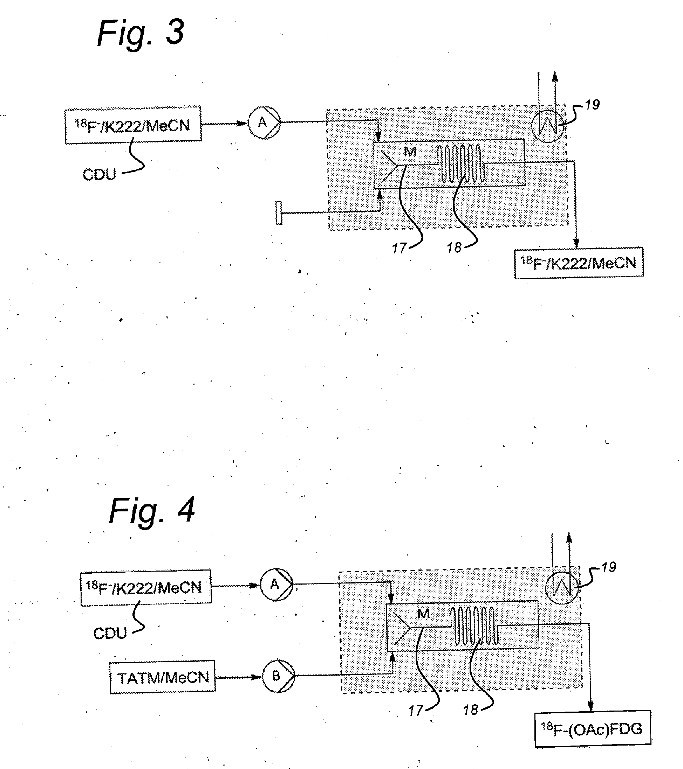

In the microfluidic set-up as shown in FIG. 4, 18F-FDG is produced in a microfluidic reactor under a continuous delivery of 18F-fluoride in channel A together with mannose triflate in channel B which is hydrolysed upon addition of 3N hydrochloric acid. A one mL solution containing 0.58 GBq of 18F-fluoride is thereby purged through the reactor using a syringe pump. The conversion of the reaction is 86 ± 2 %.

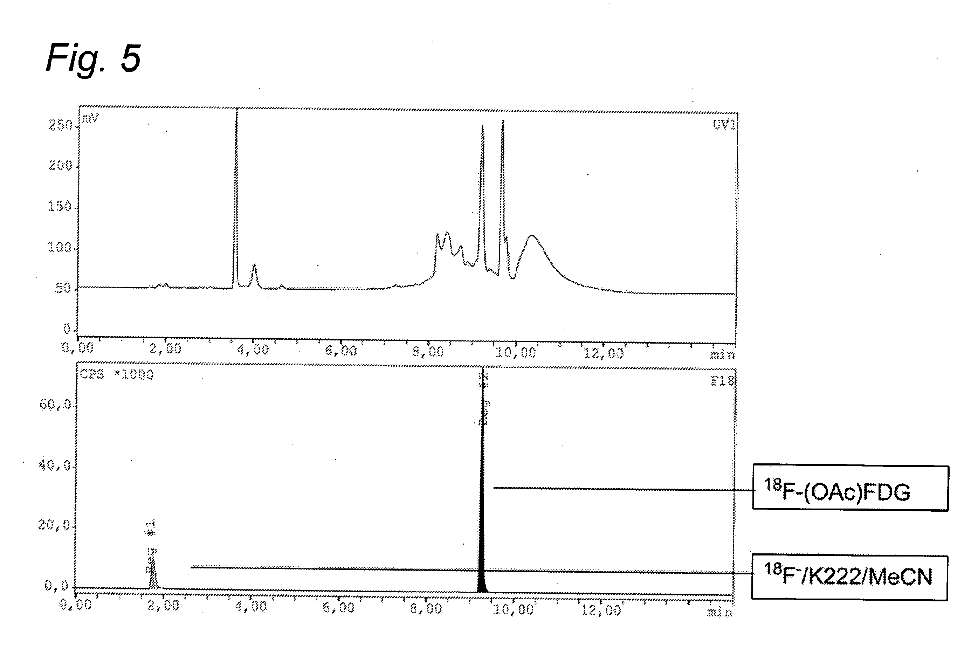

0.58 GBq 18F-fluoride is released from a QMA-cartridge with a solution of K222/K₂CO₃(aq)/MeCN into the dry unit. The fluoride is azeotropically dried with MeCN, redissolved in MeCN and collected into the syringe. The fluoride solution is continuously dispensed into a microfluidic reactor with an internal volume of 7 µL at 100 °C together with the substrate (mannose triflate). The flowrate of dispensing is 3.5 µL/min of both inlets. The acetylated FDG is collected over a period of 1 hour. With a full conversion for the nucleophilic fluorination, the acetylated FDG is hydrolysed in a second reactor. The outflow of the first reactor is therefore dispensed into the second reactor together with a solution of 1N HCl dispensed with a flowrate of 3.5 µL/min. HPLC analysis confirmed that the system produced 18F-FDG with high efficiency (see figure 5).

### Example 3: Synthesis and reaction optimisation of 18F-FMISO

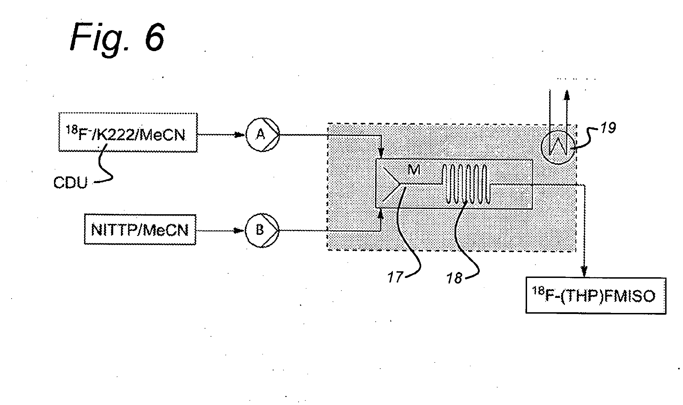

In the microfluidic set-up as shown in FIG. 6, 18F-FMISO is produced in a microfluidic reactor under a continuous delivery of 18F-fluoride in channel A together with NITTP in channel B is hydrolysed upon addition of 3N hydrochloric acid. A one mL solution containing 0.62 GBq of 18F-fluoride is thereby purged through the reactor using a syringe pump. The conversion of the reaction is 98 ±2 %.

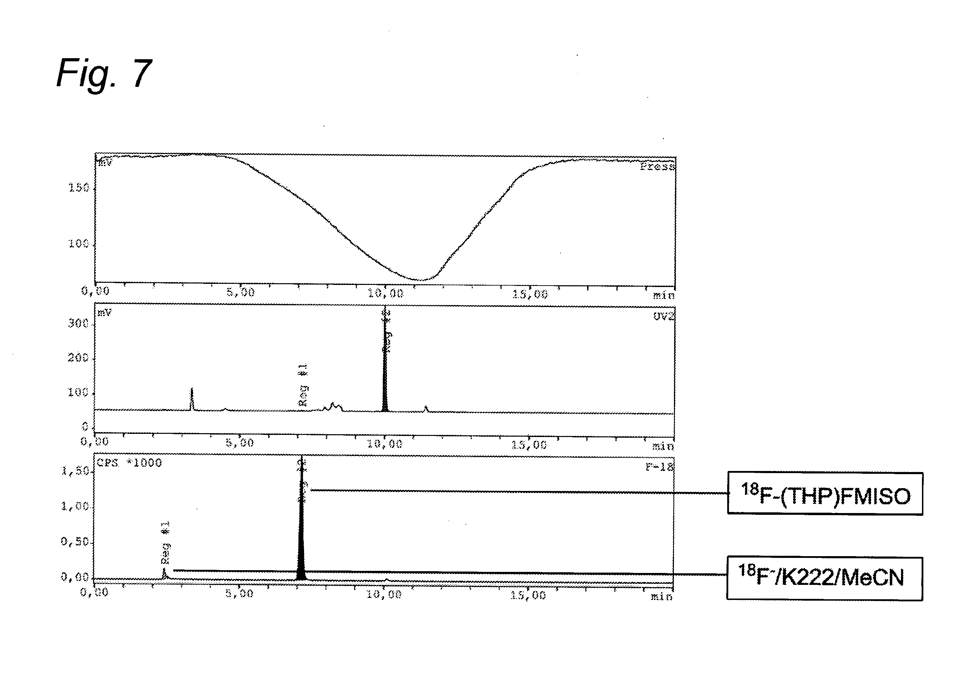

0.62 GBq 18F-fluoride is released from a QMA-cartridge with a solution of K222/K₂CO₃(aq)/MeCN into the dry unit. The fluoride is azeotropically dried with MeCN, redissolved in MeCN and collected into the syringe. The fluoride solution is continuously dispensed into a microfluidic reactor with an internal volume of 92 µL at 100 °C together with the substrate (NITTP). The flowrate of dispensing is 4.6 µL/min of both inlets. The THP-protected FMISO is collected over a period of 1 hour. With a full conversion for the nucleophilic fluorination, the THP-protected FMISO is hydrolysed in a second reactor. The outflow of the first reactor is therefore dispensed into the second reactor together with a solution of 1N HCl dispensed with a flowrate of 9.2 µL/min. HPLC analysis confirmed that the system produced 18F-FMISO with high efficiency (see figure 7).

### Description of the drawings

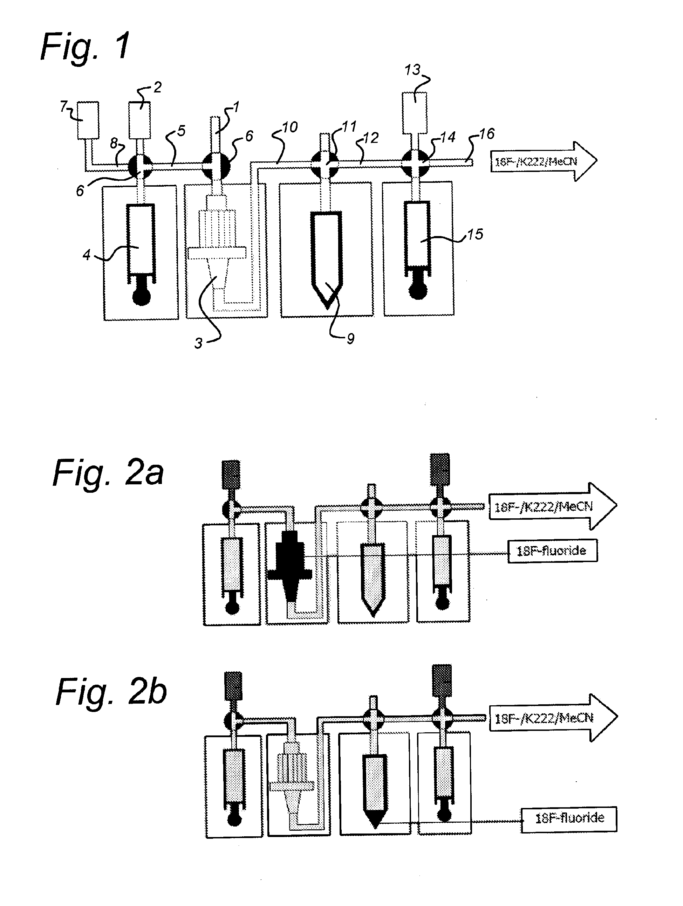

Figure 1: a schematic drawing of a CDU according to the present invention comprising an inlet (1) for introducing a liquid that has been treated in a particle accelerator; a liquid reservoir (2) for the base solution; an anion exchange column (3); a syinge pump (4) a conduit system comprising two valves (6) and tubing (5) connecting the various components; a reservoir (7) for wash and/or regeneration liquid and tubing (8) connecting it with the valve; a drying unit (9); tubing (10) connecting the anion exchange column and drying unit; a solvent reservoir (13); a syringe pump (15); an outlet (16); valves (11, 14) and tubing (12) connecting the various components.

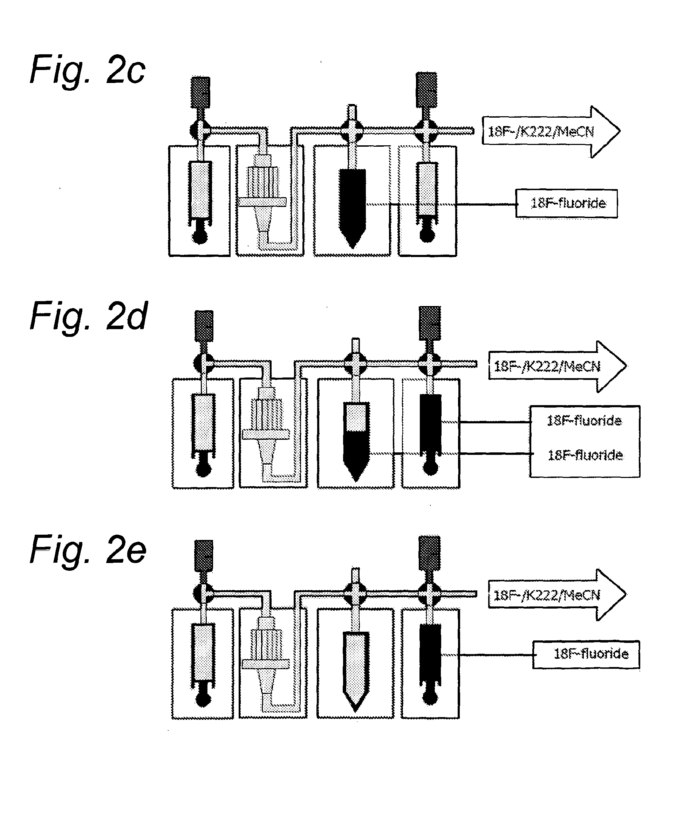

Figure 2: schematic stepwise illustration of preparation of the 18Fluoride-comple comprising a) deposition of the fluoride onto the anion exchange column; b) concentrating and drying of the fluoirde; c) re-solvation of the fluoride; d) fractionwise collection of the fluoirde, fraction 1; e) fractionwise collection of the fluoride, fraction 2.
Figure 3: technical drawing of the dry unit (CDU) connected to a microfluidic reactor comprising an inlet connected to the CDU; a second inlet connected to a second dispensing unit, which continuously dispenses a liquid containing the substrate; a reactor area (18); a conduit system directing a first flow of liquid from the CDU together with a second flow of liquid from the second dispensing unit into the reactor area (17) and a means for heating the reactor area (19).
Figure 4: is a technical drawing of the Continuous Dispensing Unit (CDU) connected to the microfluidic device, as used in example 2.
Figure 5: HPLC results showing the continuous production of 18F-(OAc)FDG at different temperatures.
Figure 6: is a technical drawing of the Continuous Dispensing Unit (CDU) connected to the microfluidic device, as used in example 3.
Figure 7: HPLC results, showing the continuous production of 18F-(THP)FMISO at different temperatures.

### References

1. Efficient stereospecific synthesis of No-Carrier-Added 2-[18F]-fluoro-2-deoxy-D-glucose using aminopolyether supported nucleophilic substitution, Hamacher et. al (Hamacher, K., Coenen, H.H., Stocklin, G., J. Nucl. Med. 1986, 27, 235-238
2. Electrochemical concentration of no-carrier-added [(18)F]fluoride from [(18)O]water in a disposable microfluidic cell for radiosynthesis of (18)F-labeled radiopharmaceuticals, Saiki, Hidekazu Iwata, Ren Nakanishi, Hiroaki Wong, Rebecca Ishikawa, Yoichi Furumoto, Shozo Yamahara, Ryo Sakamoto, Katsumasa Ozeki, Eiichi, Appl. Radiat. Isot. 2010, 1-6.
3. Separation of [18F]fluoride ion from proton-irradiated [180]water within an EOF-driven micro-reactor powered by the Capilix Capella™ platform, Lu, Shuiyu, Clements, James T., Gilde, Melis Jan, Prak, Albert, Watts, Paul, Pike, Victor W, J. Labelled. Compd. Radiopharm. 2007, 50, 5-6, 597-599.
4. Multistep synthesis of a Radiolabeled Imaging Probe Using Integrated Microfluidics, C. Lee, G. Sui, A. Elizarov, C. Shu, Y, Shin, A. Dooley, J. Huang, A. Daridon, P. Wyatt, D. Stout, H. Kolb, O. Witte, N. Satyamurthy, J. Heath, Michael Phelps, S. Quake, H. Tseng, Science 2005, 1793-1796.
5. Separation of [18F]fluoride from [180]water using anion exchange resin, D. Schlyer, M. Alexoff, D. Wolf, Appl. Radiat. Isot. 1990, 41, 531-533.
6. Recovery of [18F]fluoride from [180]water in an electrochemical cell, D. Alexoff, D.J. Schlyer, A.P. Wolf, Appl. Radiat. Isot. 1989, 40, 1-6.
7. Efficient electrochemical recovery of [18F]fluoride from water, K. Hamacher, G. Blessing, J. Labelled Compd. Radiopharm. 1995, 37, 739.
8. Electrochemical cell for separation fo [18F]-fluoride from irradiated 180-water and subsequent no carrier added nucleophilic fluorination, K. Hamacher, Th. Hirsfelder, H.H. Coenen, Appl. Radiat. Isot. 2002, 56, 519-523.

## Claims

1. A process for the production of a PET or SPECT radiotracer, the method comprising:
a) providing a first liquid containing a radioisotope containing starting material;
b) at least partially drying the radioisotope containing starting material;
c) combining the at least partially dried radioisotope containing starting material with a solvent to produce a second liquid containing the radioisotope containing starting material;
d) introducing (1) at least part of the second liquid containing the radioisotope containing starting material and (2) substrate material in a reactor; and
e) reacting the radioisotope containing starting material with substrate material to produce the PET or SPECT radiotracer, wherein a syringe pump is used for adding the solvent to the at least partially dried radioisotope containing material and wherein the same syringe pump is used for collecting the second liquid and transferring said second liquid to the reactor; and wherein the radioisotope is fluorine-18.

2. The process according to claim 1, wherein the reactor is a microfluidic reactor.

3. The process according to claim 1, wherein the reactor is a flowchemistry reactor.

4. The process according to claim 1, wherein a cycle of steps a-c is followed batch-wise by more than two cycles of steps d-e.

5. The process according to claim 4, wherein at least one cycle of steps d-e differs from a cycle of steps d-e preceding it, in at least one of the reaction conditions, the reagents and/or the substrate.

6. A continuous dispensing unit (CDU) for continuously dispensing a radioisotope containing starting material, said continuous dispensing unit comprising:
i) an ion exchange column;
ii) an inlet for introducing a liquid that has been treated in a particle accelerator;
iii) a liquid reservoir and/or means for operably connecting a liquid reservoir to the CDU
iv) a conduit system for directing liquid flows from the inlet to the ion exchange column and from the liquid reservoir to the ion exchange column;
v) a drying unit comprising a heater;
vi) a conduit system (10) for directing a liquid flow from the ion exchange column to the drying unit
vii) a solvent reservoir;
viii) a syringe pump;
ix) an outlet; and
x) a conduit system for directing liquid flows between the solvent reservoir and the syringe pump, between the drying unit and the syringe pump and between the syringe pump and an outlet of the dispensing unit.

7. An instrument suitable for continuous production of a PET radiotracer comprising:
i) the continuous dispensing unit according to claim 6;
ii) a second liquid dispensing unit;
ii) a microfluidic device comprising a first inlet connected to the continuous dispensing unit; a second inlet connected to the second dispensing unit; a reactor area; and a fluidic conduit directing a first flow of liquid from the continuous dispensing unit together with a second flow of liquid from the second dispensing unit into the reactor area.

8. The continuous dispensing unit according to claim 7 or the instrument according to claim 7, wherein one or more parts of the continuous dispensing unit and/or the microfluidic reactor are contained in a radioactivity shield.

## Patentansprüche

1. Verfahren für die Herstellung eines PET- oder SPECT-Funkverfolgers, wobei das Verfahren umfasst:
a) Bereitstellen einer ersten Flüssigkeit, die ein Radioisotop enthält, das ein Ausgangsmaterial umfasst;
b) wenigstens teilweises Trocknen des Radioisotops, das das Ausgangsmaterial enthält;
c) Kombinieren des wenigstens teilweise getrockneten Radioisotops, das das Ausgangsmaterial enthält, mit einem Lösungsmittel, um eine zweite Flüssigkeit zu erzeugen, die das Radioisotop umfasst, das das Ausgangsmaterial enthält;
d) Einführen (1) wenigstens eines Teils der zweiten Flüssigkeit, die das Radioisotop umfasst, das das Ausgangsmaterial enthält, und (2) des Substratmaterials in einen Reaktor; und
e) Ausführen einer Reaktion des Radioisotops, das das Ausgangsmaterial enthält, mit dem Substratmaterial, um den PET- oder SPECT-Funkverfolger herzustellen, wobei eine Spritzenpumpe verwendet wird, um das Lösungsmittel dem wenigstens teilweise getrockneten, das Radioisotop enthaltenden Material hinzuzufügen, und dieselbe Spritzenpumpe verwendet wird, um die zweite Flüssigkeit aufzunehmen und diese zweite Flüssigkeit zu dem Reaktor zu überführen; wobei das Radioisotop Fluor-18 ist.

2. Verfahren nach Anspruch 1, bei dem der Reaktor ein Mikrofluidreaktor ist.

3. Verfahren nach Anspruch 1, bei dem der Reaktor ein Durchflusschemiereaktor ist.

4. Verfahren nach Anspruch 1, bei dem einem Zyklus der Schritte a bis c stapelweise mehr als zwei Zyklen der Schritte d bis e folgen.

5. Verfahren nach Anspruch 4, bei dem sich wenigstens ein Zyklus der Schritte d bis e von einem Zyklus der Schritte d bis e, der diesem vorausgeht, in Reaktionsbedingungen und/oder Reagenzien und/oder dem Substrat unterscheidet.

6. Kontinuierliche Ausgabeeinheit (CDU) zum kontinuierlichen Ausgeben eines Radioisotops, das ein Ausgangsmaterial enthält, wobei die kontinuierliche Ausgabeeinheit umfasst:
i) eine Ionenaustauschsäule;
ii) einen Einlass zum Einleiten einer Flüssigkeit, die in einem Teilchenbeschleuniger aufbereitet wurde;
iii) einen Flüssigkeitsvorratsbehälter und/oder eine Einrichtung für die wirkungsmäβige Verbindung eines Flüssigkeitsvorratsbehälters mit der CDU;
iv) ein Leitungssystem zum Leiten von Fluidströmen von dem Einlass zu der Ionenaustauschsäule und von dem Flüssigkeitsvorratsbehälter zu der Ionenaustauschsäule;
v) eine Trocknungseinheit, die eine Heizeinrichtung umfasst;
vi) ein Leitungssystem (10) zum Leiten eines Flüssigkeitsstroms von der Ionenaustauschsäule zu der Trocknungseinheit;
vii) einen Lösungsmittelvorratsbehälter;
viii) eine Spritzenpumpe;
ix) einen Auslass; und
x) ein Leitungssystem zum Leiten von Flüssigkeitsströmen zwischen dem Lösungsmittelvorratsbehälter und der Spritzenpumpe, zwischen der Trocknungseinheit und der Spritzenpumpe und zwischen der Spritzenpumpe und einem Auslass der Ausgabeeinheit.

7. Instrument, das sich für die kontinuierliche Herstellung eines PET-Funkverfolgers eignet, umfassend:
i) die kontinuierliche Ausgabeeinheit nach Anspruch 6;
ii) eine zweite Flüssigkeitsausgabeeinheit;
iii) eine Mikrofluidvorrichtung, umfassend einen ersten Einlass, der mit der kontinuierlichen Ausgabeeinheit verbunden ist; einen zweiten Einlass, der mit der zweiten Ausgabeeinheit verbunden ist; einen Reaktorbereich und eine Fluidleitung, die einen ersten Fluidstrom von der kontinuierlichen Ausgabeeinheit zusammen mit einem zweiten Fluidstrom von der zweiten Ausgabeeinheit in den Reaktorbereich leitet.

8. Kontinuierliche Ausgabeeinheit nach Anspruch 7 oder das Instrument nach Anspruch 7, wobei wenigstens ein Teil der kontinuierlichen Ausgabeeinheit und/oder des Mikrofluidreaktors in einer Radioaktivitätsabschirmung enthalten sind.

## Revendications

1. Processus pour la production d'un radiotraceur de PET ou de SPECT, le procédé consistant à :
a) fournir un premier liquide contenant une matière première contenant un radio-isotope ;
b) sécher au moins partiellement la matière première contenant un radio-isotope ;
c) combiner la matière première contenant un radio-isotope au moins partiellement séchée à un solvant pour produire un deuxième liquide contenant la matière première contenant un radio-isotope ;
d) introduire (1) au moins une partie du deuxième liquide contenant la matière première contenant un radio-isotope et (2) un matériau de substrat dans un réacteur ; et
e) faire réagir la matière première contenant un radio-isotope avec le matériau de substrat pour produire le radiotraceur de PET ou de SPECT, dans lequel une pompe seringue est utilisée pour ajouter le solvant à la matière contenant un radio-isotope au moins partiellement séchée et dans lequel la même pompe seringue est utilisée pour collecter le deuxième liquide et transférer ledit deuxième liquide vers le réacteur ; et dans lequel le radio-isotope est le fluor 18.

2. Processus selon la revendication 1, dans lequel le réacteur est un réacteur micro fluidique.

3. Processus selon la revendication 1, dans lequel le réacteur est un réacteur de chimie en flux continu.

4. Processus selon la revendication 1, dans lequel un cycle des étapes a à c est suivi par charges de plus de deux cycles des étapes d et e.

5. Processus selon la revendication 4, dans lequel au moins un cycle des étapes d et e diffère d'un cycle des étapes d et e le précédant, quant à au moins l'un des conditions de réaction, des réactifs et/ou du substrat.

6. Unité de distribution continue (CDU) pour distribuer en continu une matière première contenant un radio-isotope, ladite unité de distribution continue comprenant :
i) une colonne d'échange d'ions ;
ii) une entrée pour introduire un liquide qui a été traité dans un accélérateur de particules ;
iii) un réservoir de liquide et/ou des moyens pour relier fonctionnellement un réservoir de liquide à la CDU ;
iv) un système de conduits pour diriger des écoulements de liquide de l'entrée vers la colonne d'échange d'ions et du réservoir de liquide vers la colonne d'échange d'ions ;
v) une unité de séchage comprenant un dispositif de chauffage ;
vi) un système de conduits (10) pour diriger un écoulement de liquide de la colonne d'échange d'ions vers l'unité de séchage ;
vii) un réservoir de solvant ;
viii) une pompe seringue ;
ix) une sortie ; et
x) un système de conduits pour diriger des écoulements de liquide entre le réservoir de solvant et la pompe seringue, entre l'unité de séchage et la pompe seringue et entre la pompe seringue et une sortie de l'unité de distribution.

7. Instrument approprié pour la production en continu d'un radiotraceur de PET comprenant :
i) l'unité de distribution continue selon la revendication 6 ;
ii) une deuxième unité de distribution de liquide ;
iii) un dispositif microfluidique comprenant une première entrée reliée à l'unité de distribution continue ; une deuxième entrée reliée à la deuxième unité de distribution ; une zone de réacteur ; et un conduit fluidique dirigeant un premier écoulement de liquide de l'unité de distribution continue avec un deuxième écoulement de liquide de la deuxième unité de distribution dans la zone de réacteur.

8. Unité de distribution continue selon la revendication 7 ou instrument selon la revendication 7, dans lequel une ou plusieurs parties de l'unité de distribution continue et/ou du réacteur microfluidique sont contenues dans un blindage contre la radioactivité.
